# EUROPÄISCHE PATENTANMELDUNG

(11) **EP 1 078 689 A2**
(43) Veröffentlichungstag der Anmeldung: **28.02.2001**
(21) Anmeldenummer: 00117273.3
(22) Anmeldetag: 16.08.2000
(51) Int. Cl.: B01J 41/14, C02F 1/42, C08F 8/30

(54) **Verfahren zur Herstellung von monodispersen Anionenaustauschern mit stark basischen funktionellen Gruppen**

(30) Priorität: 27.08.1999 DE 19940868; 10.11.1999 DE 19954015
(71) Anmelder: BAYER AG, 51368 Leverkusen (DE)
(72) Erfinder: Klipper, Reinhold, Dr., 50933 Köln (DE); Schnegg, Ulrich, Dr., 51377 Leverkusen (DE); Seidel, Rüdiger, Dr., 51375 Leverkusen (DE); Soest, Hans-Karl, 51147 Köln (DE); Mitschker, Alfred, Dr., 51519 Odenthal (DE); Lütjens, Holger, Dr., 51069 Köln (DE)

(57) **Zusammenfassung**

Die vorliegende Erfindung betrifft ein Verfahren zur Herstellung von neuen, monodispersen Anionenaustauschern, deren stark basische funktionelle Gruppen entweder in der Harzkornmitte oder in der Schale des Harzkornes vorliegen sowie ihre Verwendung.

## Beschreibung

Die vorliegende Erfindung betrifft ein Verfahren zur Herstellung von neuen, monodispersen Anionenaustauschern, deren stark basische funktionelle Gruppen entweder in der Harzkornmitte oder in der Schale des Harzkornes vorliegen, sowie ihre Verwendung.

Aus US-A 4 444 961 ist unter anderem ein Verfahren zur Herstellung monodisperser Anionenaustauscher bekannt. Hierbei werden haloalkylierte Polymere mit Alkylamin umgesetzt.

In der EP-A 0 046 535 wird unter Hinweis auf US-A 3 989 650 die Herstellung monodisperser makroporöser stark basischer Anionenaustauscher einheitlicher Teilchengröße nach einem Direktverdüsungs- und Mikroverkapselungsverfahren beschrieben.

Aus der EP-A 0 351 621 ist die Herstellung von bifunktionellen heterodispersen Anionenaustauscherharzen bekannt, die eine Verteilung der stark basischen funktionellen Gruppen sowohl in der Harzkornmitte als auch in der Harzkornschale aufweisen.

Ausgehend von diesem Stand der Technik bestand die Aufgabe der vorliegenden Erfindung darin, eine Methode zur Herstellung von monodispersen Anionenaustauschern, bevorzugt von monodispersen makroporösen Anionenaustauschern mit hoher mechanischer und osmotischer Stabilität der Perlen, einer erhöhten Aufnahmekapazität für Anionen bei gleichzeitiger Verteilung der stark basischen funktionellen Gruppen entweder in der Harzkornmitte oder in der Schale des Harzkornes, bereitzustellen.

Gegenstand der vorliegenden Erfindung ist ein Verfahren zur Herstellung monodisperser Anionenaustauscher mit der Verteilung der stark basischen funktionellen Gruppen entweder in der Harzkornmitte oder in der Harzkornschale, dadurch gekennzeichnet, dass man
a) Monomertröpfchen aus mindestens einer monovinylaromatischen Verbindung und mindestens einer polyvinylaromatischen Verbindung sowie gegebenenfalls einem Porogen und/oder gegebenenfalls einem Initiator oder einer Initiatorkombination, zu einem monodispersen, vernetzten Perlpolymerisat umsetzt,
b) dieses monodisperse, vernetzte Perlpolymerisat mit Phthalimidderivaten amidomethyliert,
c) das amidomethylierte Perlpolymerisat zu aminomethyliertem Perlpolymerisat umsetzt,
d) das aminomethylierte Perlpolymerisat nach Leuckart-Wallach zu schwach basischen Anionenaustauschern mit tertiären Aminogruppen alkyliert und
e) diese vor dem Quaternieren mit starken Säuren partiell belädt.

Überraschenderweise zeigen die gemäß vorliegender Erfindung hergestellten monodispersen Anionenaustauscher eine höhere nutzbare Kapazität in der Anwendung, einen geringeren Druckverlust und eine höhere osmotische und mechanische Stabilität, als die aus dem oben genannten Stand der Technik, insbesondere aus EP-A 0 351 621 bekannten Harze.

Das monodisperse, vernetzte, vinylaromatische Grundpolymerisat gemäß Verfahrensschritt a) kann nach den aus der Literatur bekannten Verfahren hergestellt werden. Beispielsweise werden solche Verfahren in US-A 4 444 961, EP-A 0 046 535, US-A 4 419 245 oder WO 93/12167 beschrieben, deren Inhalte von der vorliegenden Anmeldung hinsichtlich des Verfahrensschrittes a) mit umfaßt werden.

In Verfahrensschritt a) wird mindestens eine monovinylaromatische Verbindung und mindestens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt monoethylenisch ungesättigte Verbindungen wie beispielsweise Styrol, Vinyltoluol, Ethylstyrol, α-Methylstyrol, Chlorstyrol, Chlormethylstyrol, Acrylsäurealkylester und Methacrylsäurealkylester eingesetzt.

Besonders bevorzugt wird Styrol oder Mischungen aus Styrol mit den vorgenannten Monomeren eingesetzt.

Bevorzugte polyvinylaromatische Verbindungen im Sinne der vorliegenden Erfindung sind für Verfahrensschritt a) multifunktionelle ethylenisch ungesättigte Verbindungen wie beispielsweise Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat.

Die polyvinylaromatischen Verbindungen werden im allgemeinen in Mengen von 1-20 Gew.-%, vorzugsweise 2-12 Gew.-%, besonders bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des kugelförmigen Polymerisats ausgewählt. Divinylbenzol ist in vielen Fällen geeignet. Für die meisten Anwendungen sind kommerzielle Divinylbenzolqualitäten, die neben den Isomeren des Divinylbenzols auch Ethylvinylbenzol enthalten, ausreichend.

In einer bevorzugten Ausführungsform der vorliegenden Erfindung kommen in Verfahrensschritt a) mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane, Polyharnstoffe.

Als natürliches Polyamid ist beispielsweise Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wässrigen Phase gelösten Reaktivkomponente (beispielsweise einem Amin), zur Reaktion gebracht wird.

Die gegebenenfalls mikroverkapselten Monomertröpfchen enthalten gegebenenfalls einen Initiator oder Mischungen von Initiatoren zur Auslösung der Polymerisation. Für das erfindungsgemäße Verfahren geeignete Initiatoren sind beispielsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethylhexanoat, 2,5-Bis(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis(2-methylisobutyronitril).

Die Initiatoren werden im allgemeinen in Mengen von 0,05 bis 2,5 Gew.-%, vorzugsweise 0,1 bis 1,5 Gew.-%, bezogen auf die Monomeren-Mischung, angewendet.

Als weitere Zusätze in den gegebenenfalls mikroverkapselten Monomertröpfchen können gegebenenfalls Porogene verwendet werden, um im kugelförmigen Polymerisat eine makroporöse Struktur zu erzeugen. Hierfür sind organische Lösungsmittel geeignet, die das entstandene Polymerisat schlecht lösen bzw. quellen. Beispielhaft seien Hexan, Octan, Isooctan, Isododecan, Methylethylketon, Butanol oder Octanol und deren Isomeren genannt.

Die Begriffe mikroporös oder gelförmig bzw. makroporös sind in der Fachliteratur bereits eingehend beschrieben worden.

Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von ± 10 % des häufigstens Durchmessers um den häufigsten Durchmesser herum liegt.

Zum Beispiel bei einem Stoff mit häufigstem Durchmesser von 0,5 mm liegen mindestens 90 Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Bevorzugte Perlpolymerisate im Sinne der vorliegenden Erfindung, hergestellt durch Verfahrensschritt a), weisen eine makroporöse Sturkur auf.

Die Ausbildung monodisperser, makroporöser Perlpolymerisate kann beispielsweise durch Zusatz von Inertmaterialien (Porogene)zu der Monomermischung bei der Polymerisation erfolgen. Als solche sind vor allem organische Substanzen geeignet, die sich im Monomeren lösen, das Polymerisat aber schlecht lösen bzw. quellen (Fällmittel für Polymere) beispielsweise aliphatische Kohlenwasserstoffe (Farbenfabriken Bayer DBP 1045102, 1957; DBP 1113570, 1957).

In US-A 4 382 124 werden als Porogen beispielsweise Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Die mittlere Teilchengröße der gegebenenfalls verkapselten Monomertröpfchen beträgt 10 - 1000 µm, vorzugsweise 100 - 1000 µ.m. Das erfindungsgemäße Verfahren ist auch zur Herstellung monodisperser kugelförmiger Polymerisate gut geeignet.

Bei der Herstellung der monodispersen Perlpolymerisate gemäß Verfahrensschritt a) kann die wässrige Phase gegebenenfalls einen gelösten Polymerisationsinhibitor enthalten. Als Inhibitoren im Sinne der vorliegenden Erfindung kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten Monomertröpfchen zum kugelförmigen, monodispersen Perlpolymerisat erfolgt, wie bereits oben erwähnt, gegebenenfalls in Anwesenheit eines oder mehrerer Schutzkolloide in der wässrigen Phase. Als Schutzkolloide eignen sich natürliche oder synthetische wasserlösliche Polymere, wie beispielsweise Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum kugelförmigen, monodispersen Perlpolymerisat in Verfahrensschritt a) kann gegebenenfalls auch in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borats in der wässrigen Phase beträgt 0,5 - 500 mmol/l, vorzugsweise 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im allgemeinen zwischen 50 bis 180°C, vorzugsweise zwischen 55 und 130°C. Die Polymerisation dauert 0,5 bis einige Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise läßt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

Im Verfahrensschritt b) wird zunächst das Amidomethylierungsreagens hergestellt. Dazu wird beispielsweise ein Phthalimid oder ein Phthalimidderivat in einem Lösungsmittel gelöst und mit Formalin versetzt. Anschließend wird unter Wasserabspaltung hieraus ein Bis-(Phthalimido)ether gebildet. Der Bis-(Phthalimido)ether kann gegebenenfalls zum Phthalimidoester umgesetzt werden. Bevorzugte Phthalimidderivate im Sinne der vorliegenden Erfindung sind Phthalimid selber oder substituierte Phthalimide, beispielsweise Methylphthalimid.

Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) wird das Perlpolymerisat mit Phthalimidderivaten kondensiert. Als Katalysator wird hierbei Oleum, Schwefelsäure oder Schwefeltrioxid eingesetzt.

Verfahrensschritt b) wird bei Temperaturen zwischen 20 bis 120°C, bevorzugt 50 bis 100°C, besonders bevorzugt 60 bis 90°C durchgeführt.

Die Abspaltung des Phthalsäurerestes und damit die Freilegung der Aminomethylgruppe erfolgt im Verfahrensschritt c) durch Behandeln des phthalimidomethylierten vernetzten Perlpolymerisates mit wässrigen oder alkoholischen Lösungen eines Alkalihydroxids, wie Natriumhydroxid oder Kaliumhydroxid bei Temperaturen zwischen 100 und 250°C, vorzugsweise 120 -190°C. Die Konzentration der Natronlauge liegt im Bereich von 10 bis 50 Gew.-%, vorzugsweise 20 bis 40 Gew.-%. Dieses Verfahren ermöglicht die Herstellung aminoalkylgruppenhaltiger vernetzter Perlpolymerisate mit einer Substitution der aromatischen Kerne größer 1.

Das dabei entstehende aminomethylierte Perlpolymerisat wird schließlich mit voll entsalztem Wasser alkalifrei gewaschen.

Im Verfahrensschritt d) erfolgt die Herstellung der Anionenaustauscher durch Umsetzung des Aminomethylgruppen-haltigen monodispersen, vernetzten, vinylaromatischen Grundpolymerisates in Suspension mit Alkylierungsmitteln nach Leuckart-Wallach zu schwach basischen Anionenaustauschern mit tertiären Aminogruppen.

Beispielhaft werden Leuckart-Wallach-Reagenzien in Organikum, VEB Deutscher Verlag der Wissenschaften, Berlin 1968, 8. Auflage, Seite 479 beschrieben.

Als Suspensionsmedium wird Wasser eingesetzt.

Der Verfahrensschritt d) wird durchgeführt bei Temperaturen von 20 bis 150°C, bevorzugt von 40 bis 110°C. Verfahrensschritt d) wird bei Drücken von Normaldruck bis 6 bar, bevorzugt bei Normaldruck bis 4 bar durchgeführt.

Das Beladen mit starken Säuren vor dem Quaternieren gemäß Verfahrensschritt e) kann in verschiedener Weise vorgenommen werden:
1. Indem man den schwach basischen Anionenaustauscher unmittelbar mit der berechneten Säuremenge partiell belädt; oder
2. Indem man die partielle Beladung zweistufig vornimmt und den schwach basischen Anionenaustauscher zunächst mit einem Säureüberschuß vollständig belädt und in einer zweiten Stufe den vollständig beladenen schwach basischen Anionenaustauscher durch Behandeln mit einer berechneten Menge wässriger Base (0,7 bis 0,15 Val Base je Mol Aminogruppen im schwach basischen Anionenaustauscher) partiell regeneriert.

Bei der Quaternierung der schwach basischen Anionenaustauscher, die gemäß Verfahrensweise 1. partiell beladen wurden, werden bifunktionelle Anionenaustauscher erhalten, die - verglichen mit bifunktionellen Anionenaustauschem gleichen Gehaltes an stark basischen Gruppen, die nach bekannten Verfahren hergestellt wurden - einen wesentlich geringeren oder keinen Isomerisierungseffekt auf Glucose aufweisen.

Bei der Quaternierung der schwach basischen Anionenaustauscher, die gemäß Verfahrensweise 2. zweistufig partiell beladen wurden, werden bifunktionelle Anionenaustauscher erhalten, die sich von den nach bekannten Verfahren hergestellen bifunktionellen Anionenaustauschern gleichen Quaternierungsgrades durch höhere Entfärbungsleistung, eine leichtere Regenerierbarkeit und durch eine noch geringere Neigung zur Verschmutzung durch organische Substanzen auszeichnen.

Es wurde gefunden, dass durch partielle Vorbeladung der schwach basischen Anionenaustauschharze mit starken Säuren eine bestimmte Anordnung der stark und schwach basischen Gruppen innerhalb des Harzkornes erhalten wird und dass diese bestimmte Anordnung der stark basischen Gruppen im Harzkorn die Ursache für die neuen, verbesserten Eigenschaften der erfindungsgemäß erhältlichen bifunktionellen, monodispersen Anionenaustauscher mit stark basischen funktionellen Gruppen ist.

Bei der Quaternierung der schwach basischen Anionenaustauscher, die gemäß Verfahrensweise 1. partiell beladen wurden, werden bifunktionelle Anionenaustauscher erhalten, die die stark basischen Gruppen in der Harzkornmitte enthalten; bei der Quaternierung der schwach basischen Anionenaustauscher, die gemäß Verfahrensweise 2. partiell beladen wurden, befinden sich die stark basischen Gruppen in der Schale des Harzkornes. Bei der Quaternierung der schwach basischen Anionenaustauscher ohne Säurevorbehandlung werden bifunktionelle Anionenaustauscher erhalten, bei denen die stark basischen Gruppen statistisch über den gesamten Kornquerschnitt verteilt sind.

Das partielle Beladen der schwach basischen Anionenaustauscher mit Säuren gemäß Verfahrensweise 1. wird zur Erzielung einer möglichst gleichmäßigen partiellen Beladung der Harzkörner vorzugsweise so vorgenommen, dass man den schwach basischen Anionenaustauscher in der berechneten Menge wässriger Säure suspendiert und die Suspension bei Temperaturen von 5 bis 40°C, vorzugsweise bei Raumtemperatur, so lange intensiv rührt, bis sich der pH-Wert der wässrigen Lösung nicht mehr ändert. Die partielle Beladung des schwach basischen Anionenaustauschers mit Säure kann aber auch in der Weise vorgenommen werden, dass man den Austauscher in voll entsalztem Wasser suspendiert und die Suspension unter intensivem Rühren bei Temperaturen von 5 bis 40°C mit der berechneten Säuremenge versetzt und anschließend wiederum bis zur pH-Wert-Konstanz rührt. Die partielle Quaternierung zum bifunktionellen Anionenaustauscher kann unmittelbar durch Zugabe des Alkylierungsmittels zur Suspension vorgenommen werden.

Beim partiellen Beladen der schwach basischen Anionenaustauscher gemäß Verfahrensweise 2. kann der erste Teilschritt, das vollständige Beladen des schwach basischen Anionenaustauschers mit Säuren, sowohl durch Suspendieren des schwach basischen Anionenaustauschers in der Säure und Rühren der Suspension bis zur pH-Wert-Konstanz der wässrigen Lösung (batch-Verfahren) oder durch Überleiten der Säure über den in einer Filtersäule befindlichen Anionenaustauscher (Säulenverfahren) erfolgen. Nach dem vollständigen Beladen wird der Säureüberschuß durch Waschen mit entsalztem Waser entfernt. Der zweite Teilschritt, die partielle Regeneration, wird zur Erzielung einer möglichst gleichmäßigen partiellen Regeneration aller Harzkörner vorzugsweise nach dem batch-Verfahren vorgenommen, d.h. der in der Salzform befindliche schwach basische Anionenaustauscher wird in entsalztem Wasser suspendiert und die Suspension unter intensivem Rühren bei Temperaturen von 5 bis 40°C, mit der berechneten Menge Base versetzt und anschließend bis zur pH-Wert-Konstanz der wässrigen Lösung gerührt.

Für das Beladen der schwach basischen Anionenaustauscher mit Säuren eignen sich starke anorganische Säuren wie Salzsäure, Salpetersäure, Schwefelsäure oder Phosphorsäure und starke organische Säuren wie Ameisensäure oder p-Toluolsulfonsäure. Aus wirtschaftlichen Gründen sind die anorganischen Säuren bevorzugt.

Die Konzentration der Säuren in den zum Beladen verwendeten wässrigen Lösungen beträgt vorzugsweise 0,1 bis 20 Gew.-%, insbesondere 5 bis 10 Gew.-%.

Für das partielle Regenerieren der vollständig beladenen schwach basischen Anionenaustauscher können als wässrige Lösungen sowohl anorganische als auch organische Basen verwendet werden; bevorzugt werden die wässrigen Lösungen von Natriumhydroxid, Kaliumhydroxid, Soda und Ammoniak eingesetzt. Die Konzentration der Basen in den wässrigen Lösungen beträgt vorzugsweise 5 bis 10 Gew.-%.

Die im erfindungsgemäßen Verfahren zur Herstellung der bifunktionellen Anionenaustauscher zu verwendenden schwach basischen Anionenaustauschharze und ihre Herstellung sind bekannt (siehe z.B. Ullmanns Enzyklopädie der technischen Chemie, 4. Auflage, Band 13, Seiten 301 bis 303). Es können schwach basische Anionenaustauschharze auf Basis vernetzter Polyacrylate oder vernetzter Polystyrole verwendet werden. Die Anionenaustauscher können gelförmig oder makroporös sein. Bifunktionelle Anionenaustauscher mit besonders vorteilhaften Eigenschaften werden ausgehend von Harzen aus vernetztem Polystyrol erhalten.

Anschließend an die erfindungsgemäße partielle Beladung der schwach basischen Anionenaustauscher mit starken Säuren, werden die partiell in der Salzform vorliegenden Anionenaustauscher in üblicher Weise (siehe Ullmanns Enzyklopädie loc. cit.) quaterniert. Der Quaternierungsgrad richtet sich nach dem Verwendungszweck, für den der betreffende Anionenaustauscher vorgesehen ist. Für die Entsalzung von Zuckerlösungen werden bevorzugt bifunktionelle Anionenaustauscher auf Basis von vernetztem Polystyrol verwendet, deren Gehalt an stark basischen Gruppen 5 bis 25 % der insgesamt im Anionenaustauscher enthaltenen basischen Gruppen beträgt; für die Entfärbung von Zuckerlösungen werden bevorzugt bifunktionelle, mit hydrophoben Resten, z.B. Benzylresten, quaternierte Anionenaustauscher auf Basis von vernetztem Polyacrylat verwendet, deren Gehalt an stark basischen Gruppen 20 bis 75 %, bevorzugt 40 bis 80 %, der insgesamt im Anionenaustauscher enthaltenen basischen Gruppen beträgt.

Weiterhin Gegenstand der vorliegenden Erfindung sind die nach dem erfindungsgemäßen Verfahren hergestellten monodispersen Anionenaustauscher mit der Verteilung der stark basischen funktionellen Gruppen entweder in der Harzkornmitte oder in der Harzkornschale.

Durch das erfindungsgemäße Verfahren entstehen bevorzugt monodisperse Anionenaustauscher mit den funktionellen Gruppen(CH₂)ₙ―NR₁―R₂] oder(CH₂)ₙ―N⊕R₁R₂R₃] X^{⊖}, worin
- R₁: für eine Alkylgruppe, eine Hydroxyalkylgruppe oder eine Alkoxyalkylgruppe steht,
- R₂: für eine Alkylgruppe, eine Alkoxyalkylgruppe oder eine Hydroxyalkylgruppe steht,
- R₃: für eine Alkylgruppe, eine Alkoxyalkylgruppe oder eine Hydroxyalkylgruppe steht,
- n: für eine Zahl 1 bis 5, besonders bevorzugt 1 steht und
- X: für ein anionisches Gegenion, bevorzugt für Br⁻, Cl⁻, SO₄²⁻, NO₃⁻, OH⁻steht,
wobei (2) entweder ganz besonders bevorzugt in der Harzkornmitte oder ganz besonders bevorzugt in der Harzkornschale vorliegt.

In den Resten R₁, R₂ und R₃ steht Alkoxy bzw. Alkyl jeweils bevorzugt für 1 bis 6 Kohlenstoffatome.

In den erfindungsgemäßen monodispersen Anionenaustauschern trägt jeder aromatische Kern bevorzugt 0,1 bis 2 der obengenannten funktionellen Gruppe (1) oder (2).

Die erfindungsgemäß hergestellten Anionenaustauscher werden eingesetzt
zur Entfernung von Anionen aus wässrigen oder organischen Lösungen und deren Dämpfen
zur Entfernung von Anionen aus Kondensaten
zur Entfernung von Farbpartikeln aus wässrigen oder organischen Lösungen und deren Dämpfen
zur Entfärbung und Entsalzung von Molken, Gelatinedünnbrühen, Fruchtsäften, Fruchtmosten und wässrigen Lösungen von Zuckern, bevorzugt von Mono- und Disacchariden, insbesondere bevorzugt von Glucose-, Fructose-, Rohrzucker- oder Rübenzuckerlösungen in der Zucker-, Stärke- oder Pharmaindustrie oder Molkereien,
zur Entfernung von organischen Komponenten aus wässrigen Lösungen, beispielsweise von Huminsäuren aus Oberflächenwasser.

Weiterhin können die erfindungsgemäßen Anionenaustauscher eingesetzt werden zur Reinigung und Aufarbeitung von Wässern in der chemischen Industrie und Elektronikindustrie, insbesondere zur Herstellung von Reinstwasser.

Weiterhin können die erfindungsgemäßen Anionenaustauscher in Kombination mit gelförmigen und/oder makroporösen Kationenaustauschern zur Vollentsalzung wässriger Lösungen und/oder Kondensaten, insbesondere in der Zuckerindusrie, eingesetzt werden.

### Beispiele

### Beispiel 1

### 1a) Herstellung des monodispersen, makroporösen Perlpolymerisates auf der Basis von Styrol, Divinylbenzol und Ethylstyrol

In einem 10 l Glasreaktor werden 3000 g voll entsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertöpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 370 g/l auf.

### 1b) Herstellung des amidomethylierten Perlpolymerisates

Bei Raumtemperatur werden 2400 ml Dichlorethan, 595 g Phthalimid und 413 g 30,0 gew.-%iges Formalin vorgelegt.Der pH Wert der Suspension wird mit Natronlauge auf 5,5 bis 6 eingestellt. Anschließend wird das Wasser destillativ entfernt. Dann werden 43,6 g Schwefelsäure zudosiert. Das entstehende Wasser wird destillativ entfernt.Der Ansatz wird abgekühlt. Bei 30°C wird 174,4 g 65 %iges Oleum zudosiert, anschließend 300,0 g monodisperses Perlpolymerisat gemäß Verfahrensschritt a). Die Suspension wird auf 70°C erhitzt und weitere 6 Stunden bei dieser Temperatur gerührt. Die Reaktionsbrühe wird abgezogen, voll entsalztes Wasser wird zudosiert und Restmengen an Dichlorethan werden destillativ entfernt.

Ausbeute an amidomethyliertem Perlpolymerisat : 1820 ml

Elementaranalytische Zusammensetzung: Kohlenstoff : 75,3 Gew.-%; Wasserstoff: 4,6 Gew.-%; Stickstoff: 5,75 Gew.-% ;

### 1c) Herstellung des aminomethylierten Perlpolymerisates

Zu 1770 ml amidomethyliertem Perlpolymerisat aus Beispiel 1b) werden 851 g 50 gew.-%ige Natronlauge und 1470 ml voll entsalztes Wasser bei Raumtemperatur hinzudosiert. Die Suspension wird auf 180°C erhitzt und 8 Stunden bei dieser Tempeartur gerührt.

Das erhaltene Perlpolymerisat wird mit voll entsalztem Wasser gewaschen.
Ausbeute an aminomethyliertem Perlpolymerisat : 1530 ml
Als Gesamtausbeute - hochgerechnet - ergeben sich 1573 ml
Elementaranalytische Zusammensetzung: Kohlenstoff: 78,2 Gew.-%; Stickstoff: 12,25 Gew.-%; Wasserstoff: 8,4 Gew.-%.
Menge an Aminomethylgruppen in mol pro Liter aminomethyliertem Perlpolymerisat: 2,13
Menge an Aminomethylgruppen in mol in der Gesamtausbeute von aminomethyliertem Perlpolymerisat: 3,259

Im statistischen Mittel wurden pro aromatischem Kern, - herrührend aus den Styrol- und Divinylbenzoleinheiten - 1,3 Wasserstoffatome durch Aminomethylgruppen substituiert.

### 1d) Herstellung eines monodispersen schwach basischen Anionenaustauschers mit Dimethylaminomethylgruppen

Bei Raumtemperatur werden zu 1330 ml aminomethyliertem Perlpolymerisat aus Beispiel 1c) 1995 ml voll entsalztes Wasser und 627 g 29,8 gew.-%ige Formalinlösung hinzudosiert. Der Ansatz wird auf 40°C erwärmt. Anschließend wird in 2 Stunden auf 97°C erwärmt. Hierbei werden insgesamt 337 g 85 gew.-%ige Ameisensäure hinzudosiert. Anschließend wird der pH Wert mit 50 gew.-%iger Schwefelsäure innerhalb von 1 Stunde auf pH 1 eingestellt. Bei pH 1 wird 10 Stunden nachgerührt. Nach dem Abkühlen wird das Harz mit voll entsalztem Wasser gewaschen und mit Natronlauge von Sulfat befreit und in die OH-Form überführt.
Ausbeute an Harz mit Dimethylaminogruppen : 1440 ml
Als Gesamtausbeute - hochgerechnet - ergeben sich 1703 ml
Das Produkt enthält 2,00 mol / Liter Harz Dimethylaminogruppen.
Die Gesamtmenge an Dimethylaminogruppen in mol in der Gesamtausbeute an Produkt mit Dimethylaminogruppen beträgt 3,406.

### 1e) Stark basische funktionelle Gruppen in der Harzkornmitte

1 000 ml des im Beispiel 1d) beschriebenen schwach basischen Anionenaustauschers mit Dimethylaminomethylgruppen in der freien Basenform werden in einem Reaktor - ausgerüstet mit Druckhalteventil, Gaseinleitungsrohr, Rührer und Thermometer - in 1300 ml voll entsalztem Wasser suspendiert. Es werden 1,58 Liter 3 gew.-%ige Salzsäure in 10 Minuten hinzudosiert. Die Suspension wird so lange verrührt, bis der pH-Wert der wässrigen Lösung sich nicht mehr ändert (ca. 30 Minuten). Anschließend werden innerhalb von 30 Minuten bei 40°C 25,25 g Methylchlorid (0,5 mol) eindosiert. Zur Vervollständigung der Reaktion wird die Suspension 7 Stunden bei dieser Temperatur gerührt.

Nach dem Abkühlen wird die flüssige Phase abgetrennt und das Perlpolymerisat in einer Filtersäule mit voll entsalztem Wasser gewaschen.
Ausbeute: 1625 ml
Gehalt an stark basischen Gruppen: 0,540 mol entsprechend 0,332 mol pro Liter Anionenaustauscher
Gehalt an schwach basischen Gruppen: 2,213 mol entsprechend 1,362 mol pro Liter Anionenaustauscher

### Beispiel 2

### 2a) bis 2d) werden gemäß Beispiel 1 durchgeführt

### 2e) stark basische funktionelle Gruppen in der Harzkornschale

1 000 ml des gemäß in Beispiel 1d) beschriebenen schwach basischen Anionenaustauschers mit Dimethylaminomethylgruppen in der freien Basenform werden in einer Filtersäule durch Überfiltrieren von 2 Litern 8 gew.-%iger wässriger Salzsäure in die Chloridform überführt. Der Säureüberschuss wird durch Waschen des Anionenaustauschers mit entsalztem Wasser entfernt (pH-Wert des ablaufenden Wassers 4 - 5). Die auf diese Weise erhaltenen 1 520 ml Anionenaustauscher in der Salzform werden in einem Reaktor - ausgerüstet mit Druckhalteventil, Gaseinleitungsrohr, Rührer und Thermometer - in 1900 ml entsalztem Wasser suspendiert. Dann werden unter Rühren 400 ml 8 gew.-%ige Natronlauge dosiert und bis zur pH-Wertkonstanz der wässrigen Lösung gerührt (8 bis ca. 30 Minuten). Anschließend werden innerhalb von 30 Minuten bei 40°C 25,25 g Methylchlorid (0,5 mol) dosiert. Zur Vervollständigung der Reaktion wird die Suspension 7 Stunden bei dieser Temperatur gerührt.

Nach dem Abkühlen wird die flüssige Phase abgetrennt und das Perlpolymerisat in einer Filtersäule mit voll entsalztem Wasser gewaschen.
Ausbeute: 1 605 ml
Gehalt an stark basischen Gruppen: 0,496 mol entsprechend 0,309 mol pro Liter Anionenaustauscher
Gehalt an schwach basischen Gruppen: 1,989 mol entsprechend 1,239 mol pro Liter Anionenaustauscher

### Bestimmung der Menge an schwach- und stark basischen Gruppen in Anionenaustauschern

100 ml Anionenaustauscher werden in einer Glassäule in 1 Stunde und 40 Minuten mit 1 000 ml 2 gew.-%iger Natronlauge beaufschlagt. Anschließend wird das Harz mit voll entsalztem Wasser zur Entfernung des Überschusses an Natronlauge gewaschen.

### Bestimmung der NaCl-Zahl

50 ml des in der freien Basenform und neutral gewaschenen Austauschers werden in eine Säule gegeben und mit 950 ml 2,5 gew.-%iger wässriger Natriumchloridlösung beaufschlagt. Der Ablauf wird aufgefangen, mit voll entsalztem Wasser auf 1 Liter aufgefüllt und hiervon werden 50 ml mit 0,1 n (= 0,1 normaler Salzsäure) Salzsäure titriert. Das Harz wird mit voll entsalztem Wasser gewaschen.

Verbrauchte ml 0,1 n Salzsäure x 4 / 100 = NaCl-Zahl in mol/Liter Harz.

### Bestimmung der NaNO₃-Zahl

Dann werden 950 ml 2,5 gew.-%ige Natriumnitratlösung überfiltriert. Der Ablauf wird mit voll entsalztem Wasser auf 1 000 ml aufgefüllt. Hiervon wird ein aliquoter Teil - 10 ml - abgenommen und auf seinen Chloridgehalt durch Titration mit Quecksilbernitratlösung analysiert.

Verbrauchte ml Hg (NO₃)-Lösung x Faktor / 17,75 = NaNO₃-Zahl in mol/Liter Harz.

### Bestimmung der HCl-Zahl

Das Harz wird mit voll entsalztem Wasser gewaschen und in ein Becherglas gespült. Es wird mit 100 ml 1 n Salzsäure versetzt und 30 Minuten lang stehen gelassen. Die gesamte Suspension wird in eine Glassäule gespült. Weitere 100 ml Salzsäure werden über das Harz filtriert. Das Harz wird mit Methanol gewaschen. Der Ablauf wird mit voll entsalztem Wasser auf 1 000 ml aufgefüllt. Hiervon werden 50 ml mit 1 n Natronlauge titriert.

(20 - verbrauchte ml 1 n Natronlauge) / 5 = HCl-Zahl in mol / Liter Harz.

Die Menge an stark basischen Gruppen ist gleich der Summe aus NaNO₃-Zahl und HCl-Zahl.

Die Menge an schwach basischen Gruppen ist gleich der HCl-Zahl.

### Untersuchungsmethoden:

### Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Bestimmung der Stabilität des Harzes nach dem Walztest

Das zu prüfende Perlpolymerisat wird in gleichmäßiger Schichtdicke zwischen zwei Kunststofftücher verteilt. Die Tücher werden auf eine feste, waagerecht angebrachte Unterlage gelegt und in einer Walzapparatur 20 Arbeitstakten unterworfen. Ein Arbeitstakt besteht aus einer vor und zurück durchgeführten Walzung. Nach dem Walzen werden an repräsentativen Mustern an 100 Perlen durch Auszählen unter dem Mikroskop die Anzahl der unversehrten Perlen ermittelt.

### Quellungsstabilitätstest

In eine Säule werden 25 ml Anionenaustauscher in der Chloridform eingefüllt. Nacheinander werden 4 gew.-%ige wässrige Natronlauge, voll entsalztes Wasser, 6 gew.-%ige Salzsäure und nochmals voll entsalztes Wasser in die Säule gegeben, wobei die Natronlauge und die Salzsäure von oben durch das Harz fließen und das voll entsalzte Wasser von unten durch das Harz gepumpt wird. Die Behandlung erfolgt zeitgetaktet über ein Steuergerät. Ein Arbeitszyklus dauert 1h. Es werden 20 Arbeitszyklen durchgeführt. Nach Ende der Arbeitszyklen werden von dem Harzmuster 100 Perlen ausgezählt. Ermittelt wird die Anzahl der perfekten Perlen, die nicht durch Risse oder Absplitterungen geschädigt sind.

### Nutzbare Kapazität von stark basischen und mittelstark basischen Anionenaustauschern

1000 ml Anionenaustauscher in der Chloridform, d.h. das Stickstoffatom trägt als Gegenion Chlorid, werden in eine Glassäule gefüllt. 2500 ml 4 gew.-%ige Natronlauge werden über das Harz in 1 Stunde filtriert. Anschließend wird mit 2 Litern entbastem d.h. entkationisiertem Wasser gewaschen. Dann wird über das Harz mit einer Geschwindigkeit von 10 Litern pro Stunde Wasser mit einer Gesamtanionenhärte von 25 Grad deutscher Härte filtriert. Im Eluat werden die Härte sowie die Restmenge an Kieselsäure analysiert. Bei einem Rest-Kieselsäuregehalt von ≥ 0,1 mg/l ist die Beladung beendet.

Aus der Menge Wasser, die über das Harz filtriert wird, der Gesamtanionenhärte des überfiltrierten Wassers sowie der Menge an eingebautem Harz wird ermittelt wieviel Gramm CaO pro Liter Harz aufgenommen werden.Die Grammmenge an CaO stellt die nutzbare Kapazität des Harzes in der Einheit Gramm CaO pro Liter Anionenaustauscher dar.

### Volumenspiel Chlorid / OH - Form

100 ml basische Gruppen tragender Anionenaustauscher werden mit voll entsalztem Wasser in eine Glassäule gespült.Es werden in 1 Stunde und 40 Minuten 1000 ml 3 gew.-%ige Salzsäure überfiltriert. Anschließend wird das Harz mit voll entsalztem Wasser chloridfrei gewaschen. Das Harz wird in ein Stampfvolumeter unter voll entsalztem Wasser gespült und bis zur Volumenkonstanz eingerüttelt - Volumen V 1 des Harzes in der Chloridform.

Das Harz wird wiederum in die Säule überführt. Es werden 1000 ml 2 gew.-%ige Natronlauge überfiltriert. Anschließend wird das Harz mit voll entsalztem Wasser bis auf einen pH Wert von 8 im Eluat alkalifrei gewaschen. Das Harz wird in ein Stampfvolumeter unter voll entsalztem Wasser gespült und bis zur Volumenkonstanz eingerüttelt - Volumen V2 des Harzes in der freien Basenform - (OH - Form).
Berechnung : V1 - V2 = V3
V3 : V1/100 = Quellungsspiel Chlorid / OH - Form in %

Beim Vergleich der gemäß der Beispiele 1 und 2 erhaltenen monodispersen Anionenaustauscher mit den aus EP-A 0 351 621 bekannten heterodispersen Anionenaustauschern ergab sich nicht nur eine deutlich höhere nutzbare Kapazität, sondern darüber hinaus überraschenderweise eine gleichzeitig deutlich erhöhte Quellungsstabilität, als auch eine verbesserte Stabilität des Harzes im Walztest.

## Patentansprüche

1. Verfahren zur Herstellung monodisperser Anionenaustauscher mit der Verteilung der stark basischen funktionellen Gruppen entweder in der Harzkornmitte oder in der Harzkornschale, dadurch gekennzeichnet, dass mana) Monomertröpfchen aus mindestens einer monovinylaromatischen Verbindung und mindestens einer polyvinylaromatischen Verbindung zu einem monodispersen, vernetzten Perlpolymerisat umsetzt,b) dieses monodisperse, vernetzte Perlpolymerisat mit Phthalimidderivaten amidomethyliert,c) das amidomethylierte Perlpolymerisat zu aminomethyliertem Perlpolymerisat umsetzt,d) das aminomethylierte Perlpolymerisat nach Leuckart-Wallach zu schwach basischen Anionenaustauschern mit tertiären Aminogruppen alkyliert unde) diese vor dem Quaternieren mit starken Säuren partiell belädt.
Verfahren gemäß Anspruch 1, dadurch gekennzeichnet, dass die Monomertröpfchen mit einem Komplexkoazervat mikroverkapselt werden.
Verfahren gemäß Anspruch 2, dadurch gekennzeichnet, dass Verfahrensschritt a) in Gegenwart eines Schutzkolloids durchgeführt wird.
Verfahren gemäß der Ansprüche 1 bis 3, dadurch gekennzeichnet, dass Verfahrensschritt a) in Gegenwart mindestens eines Initiators durchgeführt wird.
Verfahren gemäß der Ansprüche 1 bis 3, dadurch gekennzeichnet, dass die Monomertröpfchen Porogene enthalten und nach der Polymerisation makroporöse, vernetzte Perlpolymerisate bilden.
Verfahren gemäß der Ansprüche 1 bis 5, dadurch gekennzeichnet, dass in Verfahrensschritt a) ein Polymerisationsinhibitor eingesetzt wird.
Verfahren gemäß Anspruch 3, dadurch gekennzeichnet, dass als Schutzkolloide Gelatine, Stärke, Polyvinylalkohol, Polyvinylpyrrolidon, Polyacrylsäure, Polymethacrylsäure oder Copolymerisate aus (Meth)acrylsäure oder (Meth)acrylsäureester eingesetzt werden.
Verfahren gemäß Anspruch 1, dadurch gekennzeichnet, dass als monovinylaromatische Verbindungen monoethylenisch ungesättigte Verbindungen eingesetzt werden.
Verfahren gemäß Anspruch 1, dadurch gekennzeichnet, dass als polyvinylaromatische Verbindungen Divinylbenzol, Divinyltoluol, Trivinylbenzol, Divinylnaphthalin, Trivinylnaphthalin, 1,7-Octadien, 1,5-Hexadien, Ethylenglycoldimethacrylat, Trimethylolpropantrimethacrylat oder Allylmethacrylat eingesetzt werden.
Verfahren gemäß Anspruch 4, dadurch gekennzeichnet, dass als Initiator Peroxyverbindungen wie Dibenzoylperoxid, Dilaurylperoxid, Bis-(p-chlorbenzoyl)peroxid, Dicyclohexylperoxydicarbonat, tert.-Butylperoctoat, tert.-Butylperoxy-2-ethyl-hexanoat, 2,5-Bis-(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis-(2-methylisobutyronitril) eingesetzt werden.
Verfahren gemäß Anspruch 1, dadurch gekennzeichnet, dass in Verfahrensschritt b) zunächst ein Phthalimidoether gebildet wird.
Verfahren gemäß Anspruch 11, dadurch gekennzeichnet, dass der Phthalimidoether aus Phthalimid oder seinen Derivaten und Formalin hergestellt wird.
Verfahren gemäß der Ansprüche 11 und 12, dadurch gekennzeichnet, dass die Reaktion des Phthalimidoethers mit dem Perlpolymerisat in Gegenwart von Oleum, Schwefelsäure oder Schwefeltrioxid stattfindet.
Verfahren gemäß Anspruch 1, dadurch gekennzeichnet, dass man in Schritt e) den schwach basischen Anionenaustauscher unmittelbar mit der berechneten Säuremenge partiell belädt.
Verfahren gemäß Anspruch 1, dadurch gekennzeichnet, dass man in Schritt e) die partielle Beladung zweistufig vornimmt und den schwach basischen Anionenaustauscher zunächst mit einem Säureüberschuß vollständig belädt und in einer zweiten Stufe den vollständig beladenen schwach basischen Anionenaustauscher durch Behandeln mit einer berechneten Menge wässriger Base partiell regeneriert.
Monodisperse Anionenaustauscher mit stark basischen funktionellen Gruppen entweder in der Harzkornmitte oder in der Schale des Harzkorns hergestellt nach einem Verfahren gemäß Anspruch 1.
Monodisperse Anionenaustauscher gemäß Anspruch 16, dadurch gekennzeichnet, dass diese eine makroporöse Struktur aufweisen.
Monodisperse Anionenaustauscher gemäß der Ansprüche 16 bis 17, dadurch gekennzeichnet, dass diese die funktionellen Gruppen(CH2)n―NR1―R2] oder(CH2)n―N⊕R1R2R3] X⊖ worinR1für eine Alkylgruppe, eine Hydroxyalkylgruppe oder eine Alkoxyalkylgruppe steht,R2für eine Alkylgruppe, eine Alkoxyalkylgruppe oder eine Hydroxyalkylgruppe steht,R3für eine Alkylgruppe, eine Alkoxyalkylgruppe oder eine Hydroxyalkylgruppe steht,nfür eine ganze Zahl 1 bis 5 steht undXfür ein anionisches Gegenion steht, tragen.
Verwendung der monodispersen Anionenaustauscher gemäß der Ansprüche 16 bis 18 zur Entfernung von Anionen, Farbpartikeln oder organischen Komponenten aus wässrigen oder organischen Lösungen und Kondensaten.
Verfahren zur Entfernung von Anionen, Farbpartikeln oder organischen Komponenten aus wässrigen oder organischen Lösungen und Kondensaten, dadurch gekennzeichnet, dass man monodisperse Anionenaustauscher gemäß der Ansprüche 16 bis 18 einsetzt.
Verwendung der monodispersen Anionenaustauscher gemäß der Ansprüche 16 bis 18 zur Reinigung und Aufarbeitung von Wässern der chemischen Industrie und der Elektronik-Industrie.
Verfahren zur Reinigung und Aufarbeitung von Wässern der chemischen Industrie und der Elektronik-Industrie, dadurch gekennzeichnet, dass man monodisperse Anionenaustauscher gemäß der Ansprüche 16 bis 18 einsetzt.
Verwendung der monodispersen Anionenaustauscher gemäß der Ansprüche 16 bis 18 zur Vollentsalzung wässriger Lösungen und/oder Kondensate, dadurch gekennzeichnet, dass man diese in Kombination mit gelförmigen und/oder makroporösen Kationenaustauschern einsetzt.
Verfahren zur Vollentsalzung wässriger Lösungen und/oder Kondensate, dadurch gekennzeichnet, dass man monodisperse Anionenaustauscher gemäß der Ansprüche 16 bis 18 in Kombination mit gelförmigen und/oder makroporösen Kationenaustauschern einsetzt.
Kombinationen von monodispersen Anionenaustauschern gemäß der Ansprüche 16 bis 18 mit gelförmigen und/oder makroporösen Kationenaustauschern zur Vollentsalzung wässriger Lösungen und/oder Kondensate.
Verwendung von monodispersen Anionenaustauschern gemäß der Ansprüche 16 bis 18 zur Entfärbung und Entsalzung von Molken, Gelatinedünnbrühen, Fruchtsäften, Fruchtmosten und wässrigen Lösungen von Zuckern.
Verfahren zur Entfärbung und Entsalzung von Molken, Gelatinedünnbrühen, Fruchtsäften, Fruchtmosten und wässrigen Lösungen von Zuckern in der Zucker-, Stärke- oder Pharmaindustrie oder Molkereien, dadurch gekennzeichnet, dass man monodisperse Anionenaustauscher gemäß der Ansprüche 16 bis 18 einsetzt.
